**Europäisches Patentamt**

**European Patent Office**

**Office européen des brevets**

(19)

(11) Veröffentlichungsnummer: **0 262 144**
**B1**

(12) **EUROPÄISCHE PATENTSCHRIFT**

(45) Veröffentlichungstag der Patentschrift:
29.03.89

(51) Int. Cl.⁴: **C 10 B 53/00**

(21) Anmeldenummer: 86904822.3

(22) Anmeldetag: 06.08.86

(86) Internationale Anmeldenummer:
PCT/EP 86/00472

(87) Internationale Veröffentlichungsnummer:
WO 87/01124 (26.02.87 Gazette 87/05)

(54) VERFAHREN ZUR RÜCKGEWINNUNG VON VERWERTBAREM GAS AUS MÜLL.

(30) Priorität: 16.08.85 DE 3529445

(43) Veröffentlichungstag der Anmeldung:
06.04.88 Patentblatt 88/14

(45) Bekanntmachung des Hinweises auf die Patenterteilung:
29.03.89 Patentblatt 89/13

(84) Benannte Vertragsstaaten:
AT BE CH DE FR GB IT LI LU NL SE

(56) Entgegenhaltungen:
EP-A-0 126 407
FR-A-2 138 173
US-A-4 289 625

(73) Patentinhaber: PKA Pyrolyse Kraftanlagen GmbH,
Wöhrstrasse 13, D-7080 Aalen (DE)

(72) Erfinder: WOLF, Bernd, M., Spritzenhausplatz 28,
D-7080 Aalen (DE)

(74) Vertreter: Lorenz, Werner, Dipl.- Ing.,
Fasanenstrasse 7, D-7920 Heidenheim (DE)

**Beschreibung**

Die vorliegende Erfindung betrifft ein Verfahren zur Rückgewinnung von verwertbarem Gas aus Müll durch Pyrolyse, wobei der Müll zu Pellets oder Granulaten in eine Größe von 1 - 50 mm gepreßt, auf einen Trockensubstanzgehalt von mindestens 75 % vorentwässert und anschließend in eine beheizte Schweltrommel eingebracht wird, in der Schwelgas erzeugt und von den Reststoffen, wie Asche und anderen Kleinteilen, abgetrennt wird, und wobei das erzeugte Schwelgas in einem Gaswandler unter Zufuhr von Luft und in Gegenwart eines glühenden Kohlebettes in Brenngas zerlegt wird.

Ein Verfahren dieser Art und eine Anlage hierfür ist in der DE-OS-3 347 554 beschrieben.

Durch dieses Verfahren wird ohne besondere Umweltbelastung verwertbares Gas aus dem Müll zurückerhalten, wobei insbesondere keine besonders kostenintensiven Probleme bezüglich der Abwasserbehandlung auftreten, obwohl der hohe Ammoniumanteil im Abwasser unerwünscht ist. Gleichzeitig wird dabei ein relativ guter Wirkungsgrad erzielt, wobei man auf einen Energieüberschuß von 50 % und mehr kommen kann.

Kern des Verfahrens bildet dabei eine Niedertemperaturpyrolyse in einer Schweltrommel. Dabei wird das gewonnene Gas, welches in anschließenden Prozessen nachbehandelt wird, zum Antrieb von Gasturbinen und Gasmotoren verwendet. Die Niedertemperaturverschwelung der Abfallstoffe wird bei weitgehendem Luftabschluß in einem Temperaturbereich unter 600° C vorgenommen, um u. a. eine Vergasung der im Müll vorhandenen Schwermetalle und eine anschließende Schwermetalloxidation zu verhindern, da Schwermetalloxide nicht mehr recyclebar sind und damit Umweltschäden verursachen. Die Pyrolyse in dem genannten Temperaturbereich hat jedoch zur Folge, daß in den Pyrolysereststoffen ein hoher Kohlenstoffanteil verbleibt, der bisher einer energetischen Nutzung entzogen war. Wenn im Müll ein hoher Anteil von Vegetabilien vorhanden ist, kann der Kohlenstoffanteil Im Pyrolysereststoff bis zu 40 Gewichtsprozent betragen. Bei der Hausmüllpyrolyse liegt der Kohlenstoffanteil bei ca. 18 %. Nachteilig ist auch, daß die Vegetabilien einen hohen Wassergehalt besitzen, welcher im Mittel über 50 % betragen kann. Da der Heizwert dieser Vegetabilien sehr niedrig liegt und der in dieser Vegetabilien-Fraktion vorhandenen Primärenergiegehalt durch eine Niedertemperaturpyrolyse nicht voll genutzt werden kann, beeinflussen diese Vegetabilien auch den Gesamtenergiegewinn bei der Müllaufbereitung negativ.

Der vorliegenden Erfindung liegt daher die Aufgabe zugrunde das eingangs beschriebene Verfahren dahingehend zu verbessern, daß bei Beibehaltung einer Niedertemperaturpyrolyse der daraus resultierende Energiegewinn nochmals verbessert wird und auch eine weitere Verbesserung der Abwasserprobleme bezüglich des Ammoniumanteiles erfolgt.

Erfindungsgemäß wird diese Aufgabe dadurch gelöst, daß der Müll in eine vegetabile Naßfraktion und eine leichtgewichtigere Leichtfraktion getrennt wird, wobei die Leichtfraktion anschließend zu den Briketts, Pellets oder Granulaten gepreßt und durch Pyrolyse entgast und die Naßfraktion einer Biogasanlage zur Methangasbildung zugeführt wird.

Durch die Aussortierung und getrennte Bearbeitung des Mülls läßt sich eine weitere Erhöhung der Energierückgewinnung erzielen. Die abgetrennte Leichtfraktion, welche wesentlich wasserärmer ist wie die naße und damit schwerere vegetabile Fraktion, läßt sich in herkömmlicher Weise durch die Niedertemperaturpyrolyse behandeln, wobei durch die bekannte vorangegangene Wasserabpressung und Verdampfung zu Granulat mit einem Regeltrockensubstanzwert von 85 % bearbeitet werden kann. Dadurch erhöht sich der Heizwert des Pyrolysereingases bedeutend.

Die aussortierten Vegetabilien sind aufgrund ihrer hohen Belastung mit Schwermetallen für eine Kompostierung im allgemeinen nicht mehr geeignet. Erfindungsgemäß wird diese vegetabile Naßfraktion jedoch in einer Biogasanlage bakteriell in einem Mehrstufenfermenter mittels entsprechender Bakterien biologisch zu Methangas aufbereitet. Bekanntlich entsteht unter Luftabschluß aus organischen Stoffen durch Fermentation ein methanhaltiges Gas, das ebenfalls zum Betrieb einer Gasturbine oder eines Gasmotores verwendet werden kann.

Grundsätzlich ist die Gewinnung von Methangas aus Vegetabilien durch eine Biogasanlage bereits bekannt, aber sie war bisher unwirtschaftlich. Im Zusammenhang mit einer Niedertemperaturpyrolyse führt sie jedoch zu einer unerwarteten Verbesserung der Gesamtanlage. So entsteht kein Überschußwasser aus dem Müll. Der vorhandene Anteil wird voll in Wassergas im Gaswandler umgewandelt. Vorhandene Schadstoffe werden im Waschwasser aufkonzentriert, wobei nur ein Teil davon ersetzt werden muß.

Dadurch daß die bei der Niedertemperaturpyrolyse anfallende Wärme der Biogasanlage zu geführt werden kann, welche einen entsprechenden Wärmebedarf hat, wird deren Wirkungsgrad deutlich verbessert.

So kann z. B. der bei der Pyrolyse in der Schweltrommel anfallende Pyrolysereststoff in die Biogasanlage eingebracht werden. Neben dem Wärmegewinn kann auf diese Weise der in dem Pyrolysereststoff enthaltene Kohlenstoffanteil bei der Methangasbildung mit aufgearbeitet werden.

Als Biogasanlage kann eine phasengetrennte Biogasanlage (Säure-, Essigsäure-, Methanphase) verwendet werden.

Von Vorteil ist es auch, wenn das bei der Granulierung und/oder Trocknung der Leichtfraktion anfallende Brüdendampfkondensat in die Hydrolysestufe zur Auslaugung der biologischen Stoffe eingebracht bzw. zugemischt wird. Auf diese Weise wird die hohe Temperatur des Brüdendampfkondensats zur Vorwärmung in der Biogasanlage verwendet. Auch erfolgt dadurch eine biologische Aufarbeitung und energetische Mitnutzung des in der Brüdendampfkondensation enthaltenen Ammoniumanteils, der bis ca. 200 g/m³ betragen kann und bei einer Ableitung in Kanalisationssysteme wegen seiner Beton zersetzenden Wirkung unerwünscht ist.

In weiterer Ausgestaltung kann vorgesehen sein, daß das Waschwasserkonzentrat, das bei der Wäsche, Filterung und Kühlung des Pyrolysegases anfällt, in die Biogasanlage eingebracht wird, wobei die organischen Bestandteile des Waschwasserkonzentrats ebenfalls als Grundstoff für die bakterielle Methangasbildung dienen.

Das Waschwasserkonzentrat enthält neben Phenolen weitere organische Stoffe, die zur Wärmebedarfsbedeckung der Biogasanlage und zu dessen energetischen Nutzung verwendet werden können. Außerdem enthält das schlammartige Waschwasserkonzentrat Bakterien, welche die Methangasbildung auf diese Weise beschleunigen können.

Erfindungsgemäß kann ferner vorgesehen sein, daß die nach der Biovergasung verbleibenden Reststoffe Kupolöfen zur Metallveredelung zugemischt werden.

Die Reststoffe weisen einen hohen Gehalt nicht oxidierter Schwermetalle oder Schwermetallverbindungen und mineralische oder inerte Substanzen auf, welche bei der Gußherstellung bzw. Stahlveredelung Verwendung finden können. Auf diese Weise werden auch diese Reststoffe wiederverwertet und eine evtl. Umweltbelastung vermieden. Gleiches gilt für den Pyrolysereststoff, welcher - wie erwähnt - der Biogasanlage zugeführt wird. Ebenso ist es auch möglich Klärschlamm von fremden Deponien oder Anlagen durch die Biogasanlage zu entsorgen und zu vergasen. Hierzu kann der Klärschlamm der Biogasanlage, z. B. der Hydrolysestufe, beigemischt werden. Gleiches gilt für Rohkompost.

Die wesentlichen Vorteile des erfindungsgemäßen Verfahrens liegen darin, daß:

1) Die zusammengefaßte Gasausbeute von einer Tonne Hausmüll entsprechend deren statistischem Mittelwert seiner chemischphysikalischen Zusammensetzung mehr als 850 Nm³ Gas mit einein Heizwert von mehr als 4.250 MJ betragen kann.

2) Nur noch ca. 250 kg pro Tonne (Trockensubstanzwert) nicht mehr abbaubare oder noch nicht ganz abgebaute Substanzen verbleiben. Diese Reststoffe sind biologisch stabil, d. h. unter Normalbedingungen in der Natur nicht weiter abbaubar. Sie können auf eine Deponie gebracht oder wegen des hohen Schwermetallgehaltes nochmals aufbereitet werden, was z. B. nach entsprechender Vorbehandlung durch eine Beimischung in der Stahlschmelze zur Stahlveredelung erfolgen kann.

3) Nur ca. 250 l pro Tonne Hausmüllabwässer mit wesentlich verringertem Ammoniumgehalt einem Vorfluter bzw. einer Kläranlage zugeleitet werden müssen.

4) Eine sehr umweltfreundliche Abfallbeseitigung bei gleichzeitig optimaler Energienutzung, der in den Abfallstoffen enthaltenen Primärenergie gewährleistet ist.

Wegen des geringen Transportverlustes der Pyrolysereststoffe, sowie des Waschwasserkonzentrates aus der Gaswäsche der Pyrolyseanlage ist es auch nicht unbedingt notwendig, daß die Biogasanlage sich am gleichen Standort befindet. Die Biogasanlage kann z. B. beim Müllsortier- und Granulierwerk, vorzugsweise zu dessen energetischen Versorgung erstellt und betrieben werden.

Pyrolyseanlagen, die mit dem erfindungsgemäßen Granulat betrieben werden, sollten vorzugsweise am Standort eines jeweiligen Wärmeverbrauchers errichtet und betrieben werden. Dabei können dann die Fahrzeuge, welche Granulat anliefern auf der Rückfahrt Pyrolysereststoffe und Kreislaufwasserkonzentrat zur Granuliervorrichtung und zur Biogasanlage zur dortigen Verwertung transportieren.

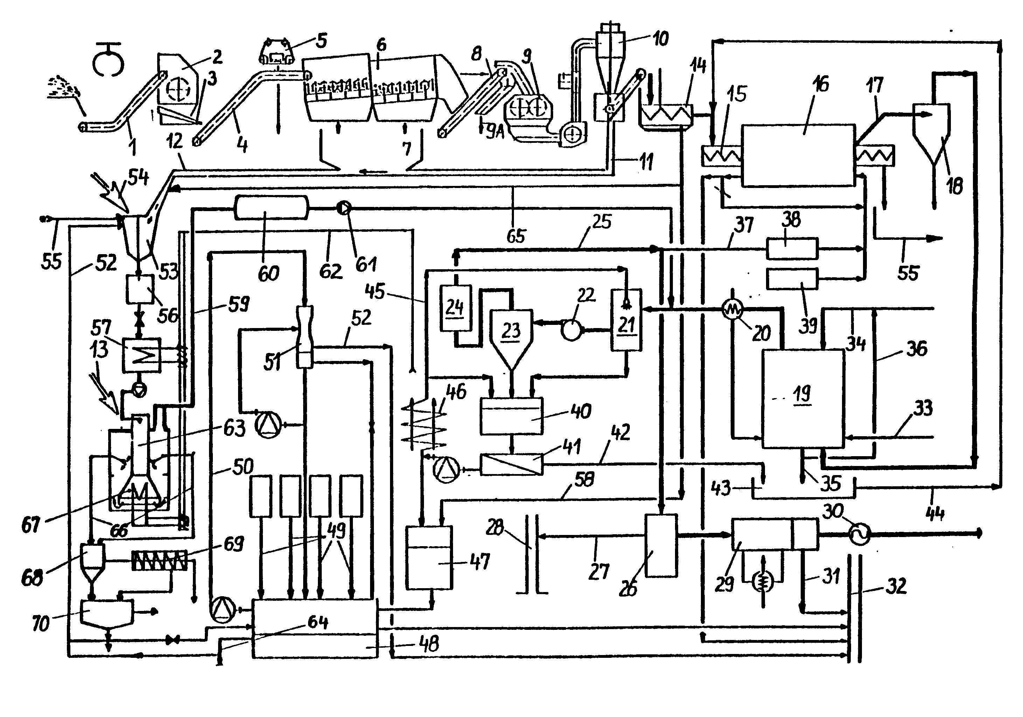

Nachfolgend ist anhand der Zeichnung ein Ausführungsbeispiel der Erfindung aus dem weitere erfindungsgemäße Merkmale und Vorteile hervorgehen, prinzipmäßig anhand eines Fließschemas beschrieben.

Der aufzuarbeitende Müll gelangt über ein Förderband 1 in einen Vorbrecher 2 zur Grobzerkleinerung. Der Vorbrecher kann z. B. eine Hammermühle sein. Über eine Förderrinne 3 und ein weiteres Förderband 4, auf dem Schrott durch eine Magnetabscheideeinrichtung 5 abgeschieden wird, gelangt der Müll auf eine Sortiereinrichtung 6. Die Sortiereinrichtung 6 kann z. B. ein Kammwalzenabscheider mit rotierenden Walzen sein, wobei die schwerere vegetabile Naßfraktion in einen darunter liegenden Behälter 7 fällt. Die leichtgewichtigere Fraktion wird am Ende der Sortiereinrichtung zur Behandlung im Pyrolyseverfahren über ein weiteres Transportband 8 einer weiteren Zerkleinerungseinrichtung 9 zugeführt. Dabei wird nochmals eine Schwergutfraktion entsprechend dem Pfeil 9A abgeführt. Der Zerkleinerungseinrichtung 9 ist ein Hydrozyklon 10 nachgeschaltet, in dem nochmals Schwerteile abgeschieden werden, die über eine Leitung 11 zusammen mit der Naßfraktion aus dem Behälter 7 über eine Zuleitung 12 einer Biogasanlage 13 zugeführt wird. Von dem Hydrozyklon 10 aus gelangt die Leichtfraktion in eine Thermoschneckenpresse 14, in der die Leichtfraktion durch Reibungspressung bei ca. 110 - 150°C in Granulate von einer Größe von ca. 1 - 50 mm zerkleinert wird. Die Wirkungsweise der Thermoschneckenpresse und ebenso der nachgeschalteten Geräte und Einrichtungen der Niedertemperaturpyrolyse entsprechen im wesentlichen den Einrichtungen wie sie z. B. in der DE-OS-3 347 554 beschrieben wurden. Die Granulate gelangen über eine Zellenradschleuse 15 in eine Schweltrommel 16, in der bei Temperaturen von 450 - 600°C in bekannter Weise Schwelgas erzeugt wird, das über eine Abzugsleitung 17 und eine Staubabscheideeinrichtung 18 einem Hochtemperatur-Gaswandler 19 zugeführt wird. In dem Hochtemperatur-Gaswandler 19 erfolgt die Aufarbeitung bzw. Umwandlung des Schwelgases über ein Kohlebett. Ein Gaswandler dieser Art ist z. B. in der DE-OS-3 317 977 beschrieben. Das aufbereitete Gas gelangt nach Durchgang durch einen Wärmetauscher 20, einem Wassersprühturm 21, einem Gebläse 22 und einem weiteren Reinigungszyklon 23 über einen Tropfenabscheider 24 und eine Gasleitung 25 zu einem Gasometer 26. Der Gasometer 26 ist im allgemeinen zum Ausgleich von Gasschwankungen notwendig. Bei einer Anlieferung von zuviel Gas kann über eine Nebenleitung 27 das überschüssige Gas einer Abfackeleinrichtung 28 zugeführt werden. Von dem Gasometer 26 aus gelangt das Gas zu einem Gasmotor 29, der mit einen Generator 30 verbunden ist. Über eine Abgasleitung 31 werden die verbrannten Abgase in einen Kamin 32 geleitet.

Über eine Leitung 33 erhält der Gaswandler 19 Wasser und über einen Kokseintrag 34 Koks. Asche wird über eine Austragsleitung 35 ausgetragen. Zur Energieeinsparung kann auch eine Koksrückleitung 36 vorgesehen sein. Von der Gasleitung 25 aus zweigt eine Nebenleitung 37 ab, welche zu einem Gasbrenner 38 führt, der zur Wärmezufuhr für die Schweltrommel 16 dient. Während der Anfahrphase dient ein Ölbrenner 39 zum Anheizen der Schweltrommel. Später, im laufenden Betrieb, kann der für die Schweltrommel erforderliche Wärmebedarf ausschließlich über den Brenner 38 gedeckt werden.

Das bei der Gasreinigung anfallende Waschwasser gelangt in einen Waschwassertank 40 und anschließend in eine Filtereinrichtung 41. Abgetrennte Feststoffe in der Filtereinrichtung 41 gelangen über eine Leitung 42 in den Aschebehälter 43, in den auch die Asche aus dem Gaswandler 19 eingebracht wird. Über eine Austragsleitung 44 werden die Reststoffe aus dem Aschebehälter 43 abgeführt und über ein Eintragssystem, vorzugsweise über die Zellenradschleuße 15, in die Schweltrommel 16 zurückgeführt. Diese Rückführung hat den erfindungsgemäßen Vorteil, daß polyzyklische aromatische Kohlenwasserstoffe, z. B. Fluoranthen, Pyren, Benzo-a-anthracen, Chrysen, welche während des Schwelgascrackprozesses im Gaswandler gebildet werden können und hauptsächlich an die Feststoffpartikel des abgetrennten Filterkuchens aus der Gaswaschfilteranlage 41 angebunden sind, im Pyrolyseprozess wieder in Verbindungen niedrigeren Molekulargewichtes aufgespalten werden, während die verbleibenden Feststoffe über die Staubabscheideeinrichtung und den sonstigen Pyrolysereststoffaustrag 55 zum überwiegenden Teil aus dem Pyrolyseverfahren-Kreislauf ausgeschieden werden. Gleichzeitig wird hierdurch der einer Überwachung bedürfende Feststoffaustrag aus der Pyrolyseanlage auf eine einzige Stelle konzentriert. Das gereinigte Waschwasser gelangt aus der Filtereinrichtung 41 über eine Rückleitung 45 nach Durchgang durch einen Kühlturm 46 wieder in den Sprühturm 21 zurück. Ein Teil des gereinigten Waschwassers wird in eine Waschwasserneutralisationsanlage 47 eingeleitet, in die auch über eine Leitung 48 das Brüdendampfkondensat aus der Thermoschneckenpresse 14 eingeleitet wird, sofern es nicht vorzugsweise über die Leitung 65 dem Vorbehälter 53 der Biogasanlage zugeführt werden kann. Von der Waschwasserneutralisationsanlage 47 aus gelangt das Waschwasser in eine Kreislaufwasser-Chargenbehandlungsanlage 48. In bekannter Weise erfolgt die chemische Reinigung des Waschwassers durch entsprechende Chemikalien, die über Leitungen 49 in die Behandlungsanlage 48 eingegeben werden. Als Chemikalien hierfür werden z. B. NaOH, $H_2O_2$, $H_2SO_4$, usw. verwendet. Über eine Kreislaufleitung 50 wird das Waschwasser durch einen Luftfilter 51 zur Entfernung von Schäumen geführt, wobei Abgase über eine Leitung 52 durch den Kamin 32 abgeführt werden.

Das chemisch und mechanisch gereinigte Wasser gelangt aus der Kreislaufwasser-Chargenbehandlungsanlage 48 über eine Leitung 52 in einen Vorbehälter 53 zur Biogasanlage. In den Vorbehälter 53 gelangen auch über die Leitung 12 die nassen Vegetabilien. Ebenso kann in den Vorbehälter bei Bedarf Klärschlamm, Rohkompost oder dgl. zugegeben werden. Dies ist durch den "Pfeil 54" angedeutet. Der Pyrolysereststoff, der einen hohen Kohlenstoffanteil enthält, gelangt über eine Leitung 55 (s. in der Figur rechts und links außen) ebenfalls in den Vorbehälter 53. Der Kohlenstoffanteil im Pyrolysereststoff kann im allgemeinen zu mehr als 80 % biologisch zur Methangasbildung aufgearbeitet werden.

Wie ersichtlich, wird auch das Brüdendampfkondensat über die Leitung 65 direkt oder nach Durchgang durch die Kreislaufwasser-Chargenbehandlung 48 und die Leitung 52 in den Vorbehälter 53 eingebracht. In dem Brüdendampfkondensat sind ebenfalls Phenole und/oder andere Kohlenwasserstoffe enthalten, die biologisch verarbeitet werden können. Ebenso besitzt das Brüdendampfkondensat einen höheren Anteil an Ammonium und kann damit als Hydrolysestoff der Biogasanlage in vorteilhafter Weise zugeleitet werden.

Von dem Vorbehälter 53 aus gelangen die in der Biogasanlage 13 aufzuarbeitenden Stoffe in eine Hydrolysestufe bzw. Hydrierer 56. An die Hydrolysestufe 56 schließt sich ein Großraumgegenstromwärmetauscher 57 an, der seine Wärme durch eine Warmwasserleitung 62 erhält, die von dem Kühlturm 46 der Waschwasserreinigungsanlage aus abzweigt und das Substrat auf die für die Biovergasung vorteilhafte Temperatur von 22°C im Eintragsbereich in die erste Phase des Fermenters (Biogasanlage) bringt. Im Faulraumboden 67 sorgt eine von der Warmwasserleitung 62 mit versorgte Rohrschlangenheizung für einen Temperaturanstieg im Methanbereich des Faulraumes von 33 - 37°C. Auf diese Weise wird die überschüssige Wärme aus der Pyrolyseanlage für die Biogasanlage 13 verwendet. Auch in dem über die Leitung 52 zugeführten Waschwasser steckt noch eine Wärmeenergie, die ebenfalls der Biogasanlage von Nutzen ist und entscheidend die Wirtschaftlichkeit der Biogasanlage erhöht, da ohne einen Wärmeaustausch herkömmliche Biogasanlagen im Winter bis zu 50 % der von ihnen erzeugten Energieträger zur Deckung des eigenen Wärmebedarfes verbrauchen.

Die Biogasanlage 13 ist in üblicher Weise aufgebaut. Sie kann eine phasengetrennte Biogasanlage sein, wobei im mittleren Schacht 63 im oberen Bereich eine normale Säurephase herrscht, während im unteren Bereich eine Essigsäurephase vorliegt. Um den mittleren Schacht liegt außen herum die Methangasphase, welche konstruktionsbedingt die strikte Abwesenheit von Sauerstoff gewährleistet, da der Sauerstoffabbau bereits im Säurebereich erfolgt ist. Das entstandene Methangas wird über eine Methangasleitung 59 abgezogen und wird über einen Puffer 60 und einen Kompressor 61 der Gasleitung 25 oder der Gaswaschanlage der Pyrolyseanlage zur H₂S-Reinigung im Bedarfsfall zugeleitet. Der Gärrückstand aus dem Fermenter (Biogasanlage 13) wird mit ca. 4 % Trockensubstanz durch aufschwimmende Saugleitungen 66 ausgetragen und einer Vorentwässerungseinrichtung 68 zugeleitet und dadurch auf ca. 20 % Trockensubstanz gebracht. Die im Gärrückstand enthaltenen Feststoffe werden über eine Trockenpresse 69 auf ca. 85 % Trockensubstanz gebracht, das verbleibende Gärwasser in einer Lagune 70 gesammelt und im Bedarfsfall der Behandlungsanlage 48 oder direkt der Kanalisation zugeleitet.

Die in der Kreislaufwasser-Chargenbehandlungsanlage 48 abgeschiedenen Stoffe gelangen über eine Leitung 64 zu einer Kläranlage.

**Patentansprüche**

1. Verfahren zur Rückgewinnung von verwertbarem Gas aus Müll durch Pyrolyse, wobei der Müll zur Pellets oder Granulaten in eine Größe von 1 - 50 mm gepreßt, auf einen Trockensubstanzgehalt von mindestens 75 % gebracht und anschließend in eine beheizte Schweltrommel eingebracht wird, in der Schwelgas erzeugt und von den Reststoffen, wie Asche und andere Kleinteile abgetrennt wird, und wobei das erzeugte Schwelgas in einen Gaswandler unter Zufuhr von Luft und in Gegenwart eines glühenden Kohlebettes in Brenngas zerlegt wird, dadurch gekennzeichnet, daß der Müll in eine vegetabile Naßfraktion und eine leichtgewichtigere Leichtfraktion getrennt wird, wobei die Leichtfraktion anschließend zu den Briketts, Pellets oder Granulatten gepreßt und durch Pyrolyse entgast und die Naßfraktion einer Biogasanlage (13) zur Methangasbildung zugeführt wird.

2. Verfahren nach Anspruch 1, dadurch gekennzeichnet, daß der bei der Pyrolyse in der Schweltrommel (16) anfallende Pyrolysereststoff in die Biogasanlage (13) eingebracht wird.

3. Verfahren nach Anspruch 2, dadurch gekennzeichnet, daß als Biogasanlage eine phasengetrennte Biogasanlage (13) verwendet wird.

4. Verfahren nach Anspruch 1 bis 3, dadurch gekennzeichnet, daß das bei der Granulierung und/oder Trocknung der Leichtfraktion anfallende Brütendampfkondensat in einem Vorbehälter (53) oder in die Hydrolysestufe (56) zur Auslaugung der biologischen Stoffe eingebracht bzw. zugemischt wird.

5. Verfahren nach einem der Ansprüche 1 - 4, dadurch gekennzeichnet, daß der Filterkuchen, d. h. die bei der Filterung des Pyrolysegases in der Filtereinrichtung (41) ausgeschiedenen Feststoffe zur Vernichtung angebundener polyzyklischer aromatischer Kohlenwasserstoffe in die Schweltrommel (16) eingebracht wird.

6. Verfahren nach einem der Ansprüche 1 bis 5, dadurch gekennzeichnet, daß das Waschwasserkonzentrat, das bei der Wäsche, Filterung und Kühlung des Pyrolysegases anfällt, in die Biogasanlage (13) eingebracht wird, wobei die organischen Bestandteile des Wasserkonzentrats ebenfalls als Grundstoff für die bakterielle Methangasbildung dienen.

7. Verfahren nach einem der Ansprüche 1 bis 6, dadurch gekennzeichnet, daß die nach der Biovergasung bleibenden Reststoffe Kupolöfen zur Stahlveredelung zugemischt werden.

8. Verfahren nach einem der Ansprüche 1 bis 7, dadurch gekennzeichnet, daß in die Biogasanlage (13) Klärschlamm und/oder Rohkompost eingebracht wird.

9. Anlage zur Durchführung des Verfahrens nach einem der Ansprüche 1 bis 8 mit einer Müllzerkleinerungseinrichtung, mit einer Trocknungseinrichtung und einer indirekt beheizten Schweltrommel, die mit einem wenigstens annähernd gasdichten Einlaß, mit einem Auslaß für feste Reststoffe und mit einer Schwelgasabzugsleitung versehen ist,

dadurch gekennzeichnet, daß zur Trennung der Naßfraktion von der Leichtfraktion eine Sortiereinrichtung (6) vorgesehen ist, wobei an den Auslaß (7, 12) für die vegetabile Naßfraktion eine Biogasanlage (13) und an den Auslaß (8) für die Leichtfraktion eine Vorrichtung zum Granulieren des Mülls und zu dessen Erwärmung (14) angeschlossen ist, hinter der eine Schweltrommel (16) zur Schwelgaserzeugung folgt.

10. Anlage nach Anspruch 9,

dadurch gekennzeichnet, daß die Kondensatleitung (58) der Vorrichtung zum Granulieren des Mülls und zu dessen Erwärmung dem Vorbehälter (53) und/oder dem Faulgasboden (67) der Biogasanlage (13) zugeführt ist.

## Claims

1. Method for recovering gas byproducts from refuse by pyrolysis, in which the refuse is pressed into pellets or granules of a size of 1 - 50 mm, brought to a solids percentage of at least 75 % and subsequently fed into a heated low-temperature carbonization drum, in which low-temperature carbonization gas is produced and separated from the residual substances, such as ashes and other small particles, the low-temperature carbonization gas which is produced being decomposed into combustible gas in a gas converter, with air being supplied and in the presence of an incandescent coal bed, characterised in that the refuse is separated into a wet vegetable fraction and a more lightweight light fraction, the light fraction subsequently being pressed into briquets, pellets or granules and degassed by pyrolysis and the wet fraction being delivered to a biogas system (13) for the production of methane gas.

2. Method according to claim 1, characterised in that the pyrolysis residue produced during the pyrolysis in the low-temperature carbonization drum (16) is fed into the biogas system (13).

3. Method according to claim 2, characterised in that the biogas system used is a phase-separated biogas system (13).

4. Method according to claims 1 to 3, characterised in that the breeder vapour condensate produced during the granulation and/or drying of the light fraction is fed into or added to a preliminary vessel (53) or the hydrolysis stage (56) to extract the biological substances.

5. Method according to one of claims 1 to 4, characterised in that the filter cake, i.e. the solids separated when the pyrolysis gas is filtered in the filter device (41), is fed into the low-temperature carbonization drum (16) to destroy bound polycyclic aromatic hydrocarbons.

6. Method according to one of claims 1 to 5, characterised in that the wash water concentrate, which is produced when the pyrolysis gas is washed, filtered and cooled, is fed into the biogas system (13), the organic constituents of the wash water concentrate also serving as a base material for the bacterial production of methane gas.

7. Method acording to one of claims 1 to 6, characterised in that the residual substances remaining after the biogasification are added to cupola furnaces for steel refining.

8. Method according to one of claims 1 to 7, characterised in that sewage sludge and/or raw compost is/are fed into the biogas system (13).

9. Plant for carrying out the method according to one of claims 1 to 8, comprising a refuse crushing device, a drying device and an indirectly heated low-temperature carbonization drum, which is provided with an at least approximately gastight inlet an outlet for solid residual substances and a low-temperature carbonization gas discharge conduit, characterised in that a sorting device (6) is provided to separate the wet fraction from the light fraction, a biogas system (13) being connected to the outlet (7, 12) for the wet vegetable fraction and a device (14) for granulating and heating the refuse being connected to the outlet (8) for the light fraction and being followed by a low-temperature carbonization drum (16) for the production of low-temperature carbonization gas.

10. Plant according to claim 9, characterised in that the condensate line (58) of the device for granulating and heating the refuse leads to the preliminary vessel (53) and/or the sewage gas floor (67) of the biogas system (13).

## Revendications

1. Procédé de récupération par pyrolyse de sousproduits gazeux à partir d'ordures, ces dernières étant comprimées en pastilles ou granulés d'une grosseur de 1 à 50 mm, amenées à une teneur en matière sèche d'au moins 75 %, et introduites ensuite dans un tambour de pyrogénation chauffé où un gaz pyrogéné est produit et séparé des matières résiduaires, telles que les cendres et autres petits déchets, et le gaz de pyrogénation produit étant décomposé dans un convertisseur en un gaz combustible par apport d'air et en présence d'un lit de charbon incandescent, caractérisé en ce que les ordures sont séparées en une fraction humide végétale et une fraction légère d'un poids plus faible, la fraction légère étant ensuite comprimée en briquettes, pastilles ou granulés et dégazée par pyrolyse et la fraction humide étant introduite dans une installation à gaz de digestion (13) pour la formation de méthane.

2. Procédé selon la revendication 1, caractérisé en ce que la matière résiduaire de pyrolyse produite dans le tambour de pyrogénation (16) lors de la pyrolyse est conduite dans l'installation à gaz de digestion (13).

3. Procédé selon la revendication 2, caractérisé en ce qu'une installation à phases séparées (13) est utilisée comme installation à gaz de digestion.

4. Procédé selon l'une quelconque des revendications 1 à 3, caractérisé en ce que les vapeurs de condensation produites lors de la granulation et/ou du séchage de la fraction légère sont introduites et/ou ajoutées à un prérécipient (53) ou un étage d'hydrolyse (56) en vue de la macération des matières biologiques.

5. Procédé selon l'une quelconque des revendications 1 à 4, caractérisé en ce que le gâteau de filtration, c'est-à-dire les matières solides séparées lors de la filtration du gaz de pyrolyse dans le dispositif de filtration (41), est introduit dans le tambour de pyrogénation (16) pour détruire les hydrocarbures aromatiques polycycliques liés.

6. Procédé selon l'une quelconque des revendications 1 à 5, caractérisé en ce que le concentré d'eau de lavage, produit lors du lavage, filtrage et refroidissement du gaz de pyrolyse, est conduit dans l'installation à gaz de digestion (13), les composants organiques du concentré d'eau de lavage servant également de matière première pour la formation bactérienne de méthane.

7. Procédé selon l'une quelconque des revendications 1 à 6, caractérisé en ce que les matières résiduaires restant après la gazéification par voie biologique sont introduites dans des cubilots pour améliorer l'acier.

8. Procédé selon l'une quelconque des revendications 1 à 7, caractérisé en ce que des boues de décantation et/ou du compost brut sont introduits dans l'installation à gaz de digestion (13).

9. Installation pour la mise en oeuvre du procédé selon l'une quelconque des revendications 1 à 8, comprenant un dispositif de broyage des ordures, un dispositif de séchage et un tambour de pyrogénation à chauffage indirect, pourvu d'une entrée au moins presque étanche aux gaz, d'une sortie pour les matières solides résiduaires et d'une conduite d'évacuation du gaz de pyrogénation, caractérisée en ce qu'en vue de séparer la fraction humide de la fraction légère, on a prévu un dispositif de triage (6), à la sortie (7, 12) pour la fraction humide végétale duquel est reliée une installation à gaz de digestion (13), et à la sortie (8) pour la fraction légère duquel est relié un dispositif de granulation et de chauffage des ordures (14), suivi d'un tambour de pyrogénation (16) pour la production du gaz de pyrogénation.

10. Installation selon la revendication 9, caractérisée en ce que la conduite de vapeurs condensées (58) du dispositif de granulation et de chauffage des ordures (14) est amenée au prérécipient (53) et/ou au fond (67) de la chambre de digestion de l'installation à gaz de digestion (13).